# EUROPEAN PATENT APPLICATION

(11) **EP 2 579 416 A1**
(43) Date of publication of application: **10.04.2013**
(21) Application number: 10851999.2
(22) Date of filing: 18.08.2010
(51) Int. Cl.: H02J 3/18, H02M 5/44

(54) **CONVERTING DEVICE OF ELECTRICAL ENERGY**

(30) Priority: 25.05.2010 CN 201010189994
(71) Applicant: New Energy Power Company, Beijing 100193 (CN)
(72) Inventor: ZHANG, Dongsheng, Beijing 100083 (CN)
(74) Representative: Wesmann, Johan Fredrik
(86) International application number: PCT/CN2010/076116
(87) International publication number: WO 2011/147128

(57) **Abstract**

The disclosure discloses an electric energy conversion device and system, to solve the problems of severe harmonic pollution, low power factor during the electric energy feedback from a power generation device to a power grid in the conventional art. The electric energy conversion device comprises: a plurality of single-phase rectifier bridge circuits, a first input ends of the a plurality of single-phase rectifier bridge circuits are connected with an output end of each phase of an Alternating Current (AC) power supply one to one, and a second input ends of the a plurality of single-phase rectifier bridge circuits are connected together; and a plurality of three-phase fully-controlled bridge circuits, wherein two input ends of each three-phase fully-controlled bridge circuit are connected with two output ends of each the rectifier bridge circuit respectively, or, two input ends of each the three-phase fully-controlled bridge circuit are connected with two output ends of each the rectifier bridge circuit through an inductor respectively. Through the technical solution of the disclosure, the waveform coefficient of the current of the power generation device is improved, the harmonic wave is reduced, and the power factor is improved.

## Description

### Field of the Invention

The disclosure relates to the technical field of power electronics, in particular, to an electric energy conversion device.

### Background of the Invention

People pay more attention to the power generation by renewable energy, such as wind power generation, solar power generation and tidal power generation. Such new energy power generation systems are characterized by decentralized power generation device, small capacity per unit, wide distribution area, and unstable output voltage and current, so how to effectively and reliably feed the electric energy generated by these renewable energy power generation devices back to the power grid at low cost and convert the electric energy generated by these renewable energy power generation devices into three-phase power for direct industrial and civil use is the problem to be solved urgently at home and abroad.

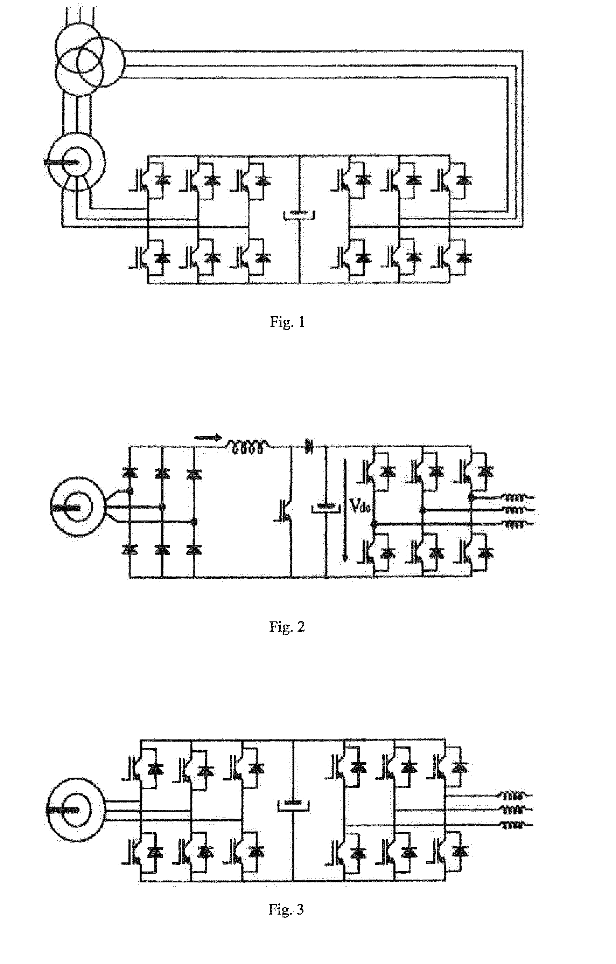

One wind power generation and electric energy feedback device in the conventional art adopts an Alternating Current (AC) excited wound rotor double-fed motor variable speed constant frequency wind power generation system in which a power converter located at the rotor side is used for regulating the AC excited current of the double-fed motor to transmit electric energy from the stator winding of the generator and directly feed the electric energy back to a power grid. Due to the characteristics of a double-fed generator system, usually, a low voltage four-quadrant operable power converter is required, such as four-quadrant operable AC-DC-AC two-level frequency converter. Fig.1 is a schematic diagram showing a four-quadrant operable AC-DC-AC two-level frequency converter in the conventional art, as shown, the converter in such scheme only processes slip power, has the normal rated power which is about one third of the generator capacity, and belongs to the low voltage converter, so the cost and size of the converter are reduced greatly, but this scheme has the problem that the generator has increased size and cost due to the usage of wound rotor and AC excitation by slip rings, and high fault rate and maintenance cost due to the slip rings.

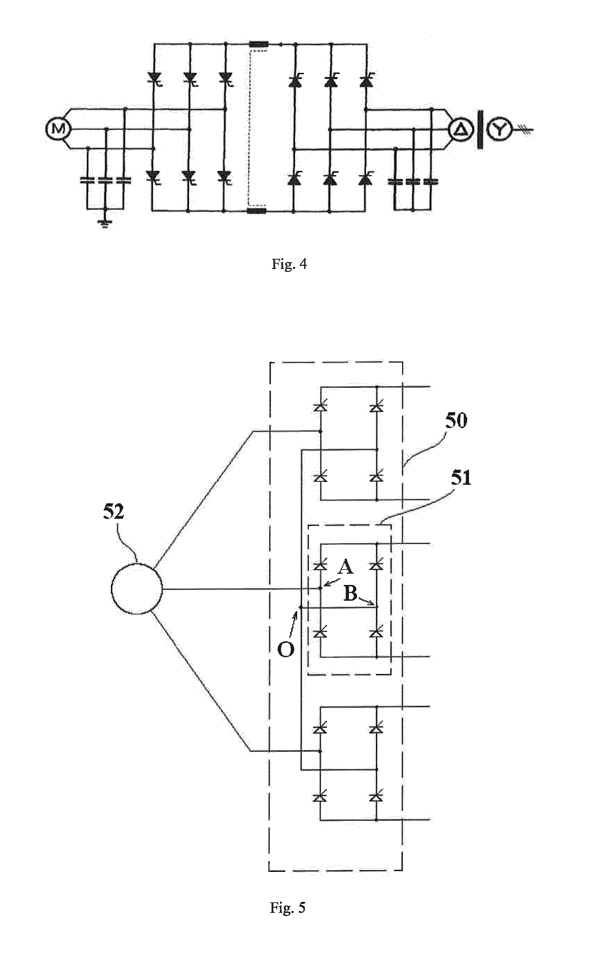

Another wind power generation and electric energy feedback device in the conventional art adopts a permanent-magnet generator variable speed constant frequency wind power generation system. In the scheme, a fan impeller drives a permanent-magnet generator to rotate to generate electric energy, which is converted into three-phase AC matched with the power grid after the frequency conversion and modulation of the power converter and fed back to the power grid to implement the variable speed constant frequency power generation. Fig. 2 is a schematic diagram showing a permanent-magnet generator variable speed constant frequency wind power generation system in the conventional art and Fig. 3 is a schematic diagram showing another permanent-magnet generator variable speed constant frequency wind power generation system in the conventional art, as both shown, this scheme solves the problem of the reliability of the generator, so that the whole system runs in low fault rate, but the converter has a high cost and large size due to the same power as the generator and a large number of electrolytic capacitors required. Fig. 4 is a schematic diagram showing a variable speed constant frequency wind power generation system using a current converter in the conventional art, as shown, the system uses a semi-controllable power semiconductor device thyristor. In this way, the cost is lower, but harmonic pollution is severe at the grid side, the power factor is low, and additional harmonic treatment device is required, which increases the whole manufacturing cost.

In the related technical solutions, there is no effective solution for the problem of severe harmonic pollution and low power factor during the electric energy feedback from the power generation device (including the renewable energy power generation device) to the power grid.

### Summary of the Invention

One aspect of the disclosure is to provide an electric energy conversion device, to solve the problems of severe harmonic pollution, low power factor, and high cost during the electric energy feedback from the power generation device to the power grid in the conventional art.

To achieve the above aim, in one aspect, the disclosure provides an electric energy conversion device.

A first kind of the electric energy conversion device of the disclosure includes: a plurality of single-phase rectifier bridge circuits, wherein a first input end of the plurality of single-phase rectifier bridge circuits are connected with an output end of each phase of an Alternating Current (AC) power supply one to one, and a second input end of the a plurality of single-phase rectifier bridge circuits are connected together; and a plurality of three-phase fully-controlled bridge circuits, wherein two input ends of each of three-phase fully-controlled bridge circuits are connected with two output ends of each the rectifier bridge circuit respectively, or, two input ends of each of the plurality of single-phase three-phase fully-controlled bridge circuit are connected with two output ends of each the plurality of single-phase rectifier bridge circuit through an inductor respectively.

Furthermore, the electric energy conversion device of the disclosure further includes a transformer provided with a plurality of three-phase windings at the secondary side, and the input ends of the three-phase fully-controlled bridge circuits are connected with the three-phase windings respectively.

Furthermore, the electric energy conversion device of the disclosure further includes at least one Pulse Width Modulation (PWM) three-phase inverter bridge circuit, three output ends of which are connected with three output ends of the three-phase fully-controlled bridge circuit via inductors in serial or via inductors and capacitors in serial respectively, or directly connected with the plurality of three-phase windings.

To achieve the above aim, in another aspect, the disclosure further provides another electric energy conversion device.

The electric energy conversion device of the disclosure includes: a plurality of groups of rectifier circuitries, wherein each group of rectifier circuitries include the plurality of rectifier bridge circuits which are sequentially connected in serial through a first and second input ends; the first input end of the rectifier bridge circuit at one end serves as the first input end of the rectifier circuitries, while the second input end of the rectifier bridge circuit at the other end serves as the second input end of the rectifier circuitries; a plurality of first input ends of the plurality of rectifier circuitries are connected with the output end of each phase of an AC power supply one to one, and a plurality of second input ends are connected together; and a plurality of groups of three-phase fully-controlled bridge circuits, wherein the two input ends of each group of three-phase fully-controlled bridge circuits are connected with two output ends of each rectifier bridge circuit respectively, or, the two input ends of each three-phase fully-controlled bridge circuit are connected with two output ends of each rectifier bridge circuit through an inductor respectively.

Furthermore, the electric energy conversion device further includes a transformer provided with the plurality of three-phase windings at the secondary side, and the input ends of the three-phase fully-controlled bridge circuit are connected with the three-phase windings respectively.

Furthermore, the electric energy conversion device further includes at least one PWM three-phase inverter bridge circuit, three input ends of which are connected with three output ends of the three-phase fully-controlled bridge circuit via inductors in serial or via inductors and capacitors in serial respectively, or directly connected with the a plurality of three-phase windings.

Through the technical solution of the disclosure, by processing the output of each phase of the three-phase AC generated by a power generation device, the waveform coefficient of the current of the power generation device is improved, the harmonic wave is reduced, and the power factor and the utilization rate of the device are improved; by taking a thyristor as a main switch element of a power conversion unit, the electric energy conversion device has a low cost and a high reliability; connected with thyristor three-phase fully-controlled bridge circuits of different grades in serial, the electric energy conversion device can be adapted to power generation devices of different grades, and the feedback power factor is improved; due to the windings at the secondary side of the isolating transformer, the electric energy conversion device can be matched with power grids of different voltage grades, and the waveform coefficient and power factor of the current fed back to the power grid can be improved; and by transmitting reactive power to the power grid, the current at the output end of the power generation device and the current at the power grid have high sine wave, and the electric energy conversion device has the advantages of high conversion efficiency, reliable operation, long service life and easy popularization and maintenance.

### Brief Description of the Drawings

The drawings illustrated here are to provide further understanding of the disclosure and constitute one part of the application, and the exemplary embodiments of the disclosure and the explanations thereof are intended to explain the disclosure, instead of improperly limiting the disclosure. In the drawings:
Fig. 1 is a schematic diagram showing a four-quadrant operable AC-DC-AC two-level frequency converter in the conventional art;
Fig. 2 is a schematic diagram showing a permanent-magnet generator variable speed constant frequency wind power generation system in the conventional art;
Fig. 3 is a schematic diagram showing another permanent-magnet generator variable speed constant frequency wind power generation system in the conventional art;
Fig. 4 is a schematic diagram showing a variable speed constant frequency wind power generation system using a current converter in the conventional art;
Fig. 5 is a schematic circuit diagram of a plurality of single-phase rectifier bridge circuits in an electric energy conversion device according to the first embodiment of the disclosure;
Fig. 6 is a schematic circuit diagram of an electric energy conversion device according to the first embodiment of the disclosure;
Fig. 7 is a schematic diagram showing the serial connection of inductors between the rectifier bridge circuit and three-phase fully-controlled bridge circuit according to the first embodiment of the disclosure;
Fig. 8 is a schematic diagram showing the connection between a PWM three-phase inverter bridge circuit and an inductor according to the first embodiment of the disclosure;
Fig. 9 is a schematic diagram showing the connection by which an electric energy feedback system feeds the electric energy generated by a multi-phase output AC power supply back to a power grid according to the second embodiment of the disclosure;
Fig. 10 is a schematic diagram showing the structure of an electric energy conversion device according to the third embodiment of the disclosure;
Fig. 11 is a schematic diagram showing the structure of a rectifier circuitry in an electric energy conversion device according to the third embodiment of the disclosure;
Fig. 12 is a schematic diagram showing the adoption of Insulated Gate Bipolar Transistor (IGBT) for a PWM three-phase inverter bridge circuit according to each embodiment of the disclosure; and
Fig. 13 is a schematic diagram showing a transformer adopting a split phase-shifting winding according to one embodiment of the disclosure.

### Detailed Description of the Embodiments

It should be noted that, in the case of no conflict, the embodiments of the disclosure and features therein can be combined with each other. The disclosure will be described below in detail with reference to the drawings and in conjunction with the embodiments.

Fig. 5 is a schematic circuit diagram of a single-phase rectifier bridge circuit in an electric energy conversion device according to the first embodiment of the disclosure.

As shown in Fig. 5, the electric energy conversion device in the first embodiment of the disclosure is the part in the dashed box 50 in Fig. 5. And this kind of electric energy conversion device includes three rectifier bridge circuits, each of the rectifier bridge circuit includes a first input end and a second input end, for example, in the rectifier bridge circuit in the dashed box 51, the first input end and the second input end are points A and B respectively. In the electric energy conversion device shown in Fig. 5, the second input ends of three rectifier bridge circuits are connected together, with the connection point, point O, shown in Fig. 5. Three first input ends of three rectifier bridge circuits in Fig. 5 are connected with the output ends of three phases of an AC power supply one to one, with the AC power supply 52 shown in Fig. 5. The AC power supply may be a generator of a renewable energy power generation system.

The rectifier element in the rectifier bridge circuit in Fig. 5 may either adopt a thyristor or a diode. The adoption of the thyristor is shown in the drawing. The electric energy conversion device shown in Fig. 5 can process the output of each phase of the AC power supply respectively, thereby, when the processed output of each phase is fed back to the power grid after inversion processing, the harmonic pollution generated during the electric energy feedback from the AC power supply to the power grid can be reduced, and the power factor of the electric energy fed from the AC power supply back to the power grid can also be improved.

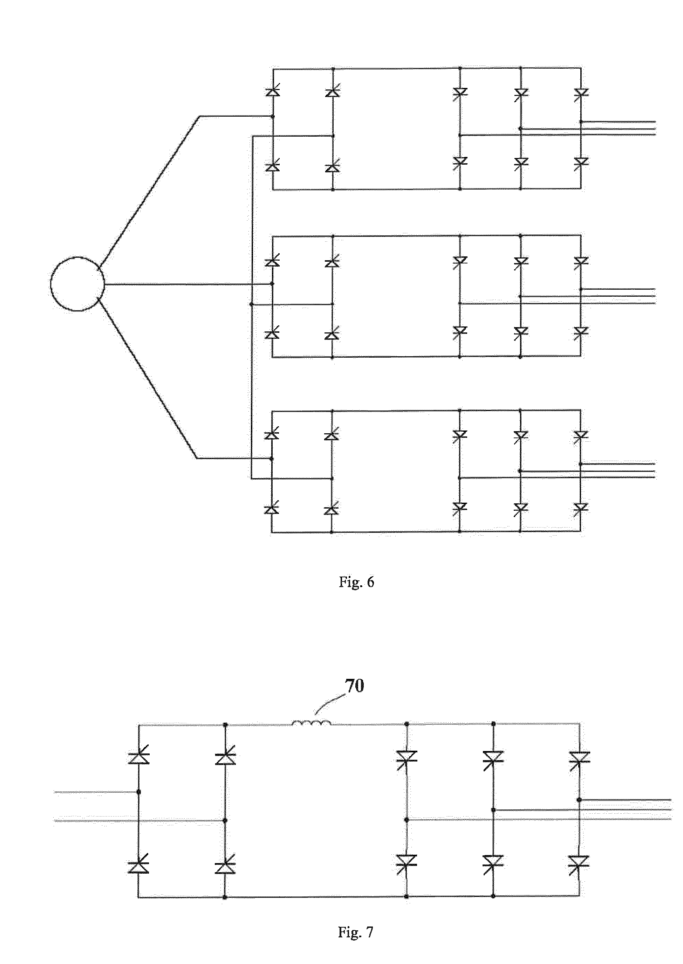

Based on the electric energy conversion device shown in Fig. 5, the three-phase fully-controlled bridge circuit can be further connected, specifically as shown in Fig. 6, Fig. 6 is a schematic circuit diagram of the electric energy conversion device according to the first embodiment of the disclosure. In Fig. 6, the three-phase fully-controlled bridge circuit is connected at the output end of each rectifier bridge circuit, which may be a thyristor three-phase fully-controlled bridge circuit. After connected with the three-phase fully-controlled bridge circuit, the electric energy conversion device in Fig. 6 can further process the electric energy fed from the AC power supply 52 back to the power grid by the three-phase fully-controlled bridge circuit therein, so as to improve the quality of electric energy.

Fig. 7 is a schematic diagram showing the serial connection of inductors between the rectifier bridge circuit and three-phase fully-controlled bridge circuit according to the first embodiment of the disclosure. An inductor, such as an inductor 70 in Fig. 7, can be connected in serial between the rectifier bridge circuit and three-phase fully-controlled bridge circuit which are connected with each other in Fig. 6, so as to filter and limit the current of the output of the rectifier bridge circuit.

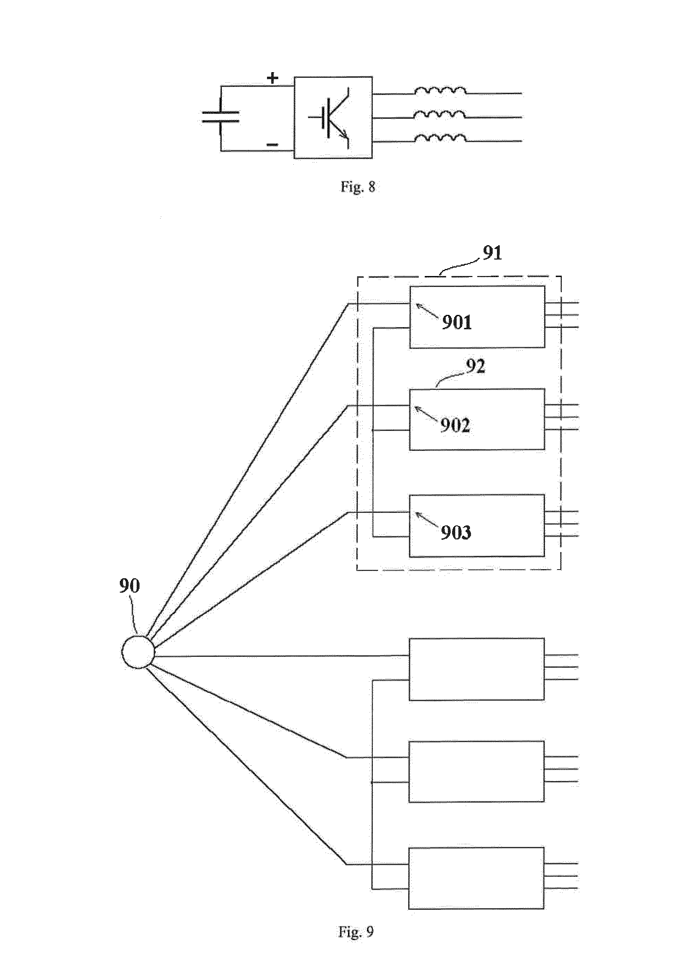

The electric energy conversion device in Fig. 6 can be provided with at least one PWM three-phase inverter bridge circuit. As shown in Fig. 8, which is a schematic diagram showing the connection between a PWM three-phase inverter bridge circuit and an inductor according to the first embodiment of the disclosure. The PWM three-phase inverter bridge circuit may be composed of a filter capacitor and a turn-off semiconductor device, wherein its DC side contains the filter capacitor, and the terminals of three phases of its AC side are connected with three inductors for filtering and current limiting respectively, and may be further serially connected with capacitors with the inductors. The PWM three-phase inverter bridge circuit connected with the inductors or the inductors and capacitors is connected with the three-phase fully-controlled bridge circuit in the electric energy conversion device in Fig. 6, so as to further compensate the power factor of the electric energy input to the power grid and further to reduce the harmonic pollution caused by electric energy.

When feeding back electric energy, the electric energy conversion device in Fig. 6 can be connected with an isolating transformer at first, wherein a plurality of three-phase windings are at the secondary side of the transformer, so, during the connection, each three-phase winding is connected with the three-phase fully-controlled bridge circuit in the electric energy conversion device in Fig. 6. A three-phase winding of the isolating transformer may be connected with one or more three-phase fully-controlled bridge circuits. When the isolating transformer is used, the PWM three-phase inverter bridge circuit connected with the inductors or the inductors and capacitors can be connected with the three-phase windings at the secondary side of the isolating transformer one to one in the embodiment. Due to the adoption of the isolating transformer, the electric energy conversion device can be matched with power grids of various voltage grades, and the waveform coefficient of current and power factor of electric energy fed back to the power grid are improved. By regulating the current at the AC side of the PWM three-phase inverter bridge circuit, the power factor at the primary side of the isolating transformer is further improved, and the harmonic wave is reduced.

The structure of an electric energy feedback system in the second embodiment of the disclosure is further described below. The electric energy feedback system in the second embodiment of the disclosure can be used for feeding the electric energy generated by a multi-phase output AC power supply back to a power grid. Fig. 9 is a schematic diagram showing the connection by which the electric energy feedback system feeds the electric energy generated by the multi-phase output AC power supply back to the power grid according to the second embodiment of the disclosure. A six-phase AC generator 90 is shown in Fig. 9, in which each dashed box, such as dashed box 91, represents an electric energy feedback unit, which can adopt the structure of the electric energy conversion device in the first embodiment of the disclosure. Each solid box, such as solid box 92, represents a rectifier bridge circuit in the embodiment or a rectifier bridge circuit and a three-phase fully-controlled bridge circuit which are connected together. A group of three-phase output ends 901, 902, and 903 of the six-phase AC generator 90 are shown here, which are connected with three first input ends 901, 902 and 903 of the rectifier bridge circuit (whose specific structure is not shown here) in the electric energy conversion device 90 one to one. According to the connection in Fig. 9, the electric energy feedback system in the embodiment can also be used for feeding the electric energy generated by a multi-phase AC generator back to the power grid.

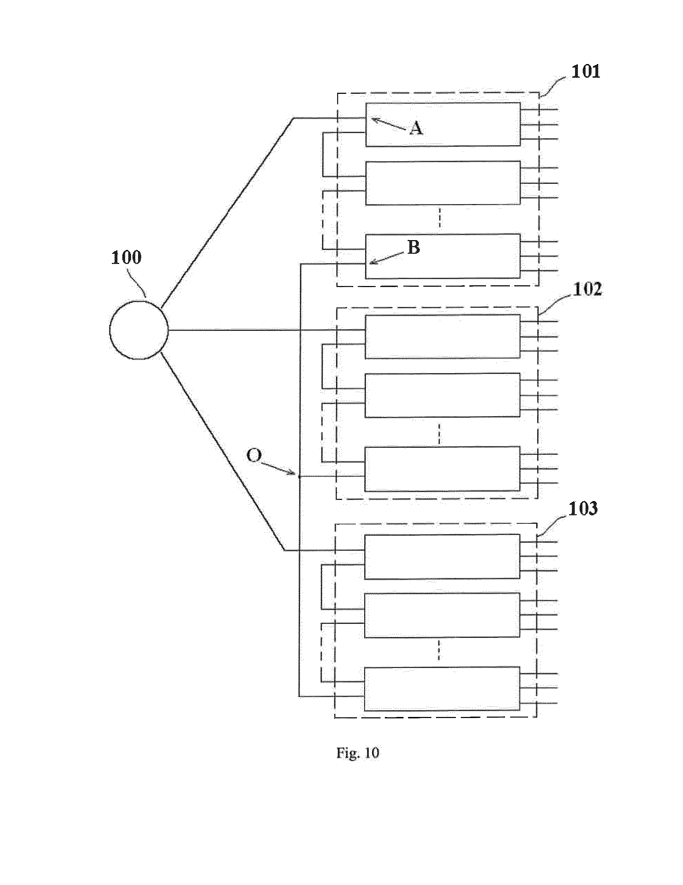

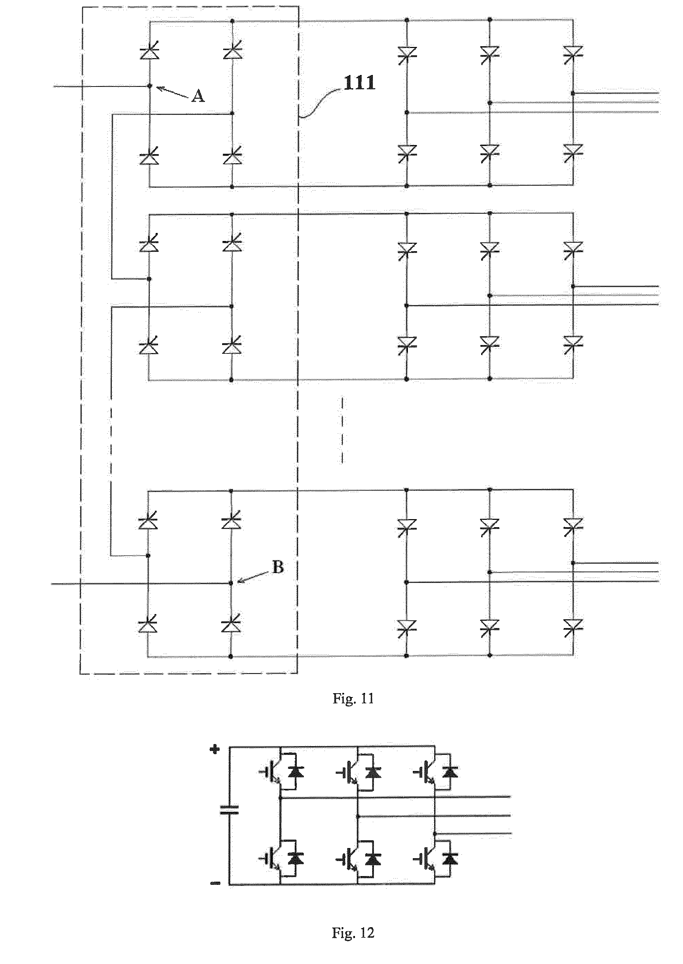

The structure of an electric energy conversion device in the third embodiment of the disclosure is further described below. Fig. 10 is a schematic diagram showing the structure of the electric energy conversion device according to the third embodiment of the disclosure. As shown in Fig. 10, the electric energy conversion device includes three rectifier circuitries and three-phase fully-controlled bridge circuits; the dashed boxes 101, 102 and 103 in Fig. 10 represent the rectifier circuitries and three-phase fully-control bridge circuits; and the structure of each rectifier circuitry is as shown in the dashed box 111 in Fig. 11, Fig. 11 is a schematic diagram showing the structure of a rectifier circuitry in the electric energy conversion device in the third embodiment of the disclosure. The rectifier circuitry in Fig. 11 includes a plurality of rectifier bridge circuits, these rectifier bridge circuits are sequentially connected in serial by input ends; the first input end of the rectifier circuit at one end, i.e., point A in Fig. 11, serves as the first input end of the rectifier circuitry; and the second input end of the rectifier circuit at the other end, i.e., point B in Fig. 11, serves as the second input end of the rectifier circuitry. The locations of points A and B are correspondingly shown in Fig. 10. In Fig. 10, three first input ends of three rectifier circuitries are connected with the output ends of three phases of the three-phase AC power supply one to one; and three second input ends are connected together, i.e., point O in Fig. 10.

In the electric energy conversion device in the third embodiment of the disclosure, the rectifier bridge circuit may be a diode rectifier circuit or a thyristor rectifier circuit. Similar to the electric energy conversion device in the first embodiment of the disclosure, in the electric energy conversion device in the third embodiment of the disclosure, the output end of each rectifier bridge circuit can be further connected with the three-phase fully-controlled bridge circuit; moreover, when the rectifier bridge circuit is connected with the three-phase fully-controlled bridge circuit, an inductor may be serially connected between the rectifier bridge circuit and the three-phase fully-controlled bridge circuit.

The electric energy conversion device in the third embodiment of the disclosure can include at least one PWM three-phase inverter bridge circuit; and with the connection way similar to that in the first embodiment, the output end of the PWM three-phase inverter bridge circuit is connected with that of the three-phase fully-controlled bridge circuit after being connected with the inductors or the inductors and capacitors in serial. If the electric energy conversion device in the embodiment is connected with the power grid by a transformer provided with a plurality of three-phase windings at the secondary side, the three-phase windings are connected with the three-phase fully-controlled bridge circuit; and the output end of the PWM three-phase inverter bridge circuit may be connected with the three-phase windings of the transformer one to one after being connected with the inductors or the inductors and capacitors in serial. A three-phase winding of the isolating transformer may be connected with one or more three-phase fully-controlled bridge circuits.

In the fourth embodiment of the disclosure, the electric energy conversion device in the third embodiment is taken as an electric energy feedback unit to form an electric energy feedback system; and a plurality of such electric energy feedback units are connected in the way similar to that in the second embodiment, i.e., in each electric energy feedback unit, three first input ends of three rectifier circuits are connected with a group of three-phase output ends of a multi-phase output AC power supply one to one, as shown in Fig. 9.

In each embodiment of the disclosure, the turn-off semiconductor device in the PWM three-phase inverter bridge circuit may adopt an IGBT or an Integrated Gate Commutated Thyristor (IGCT), or other turn-off semiconductor devices. Fig. 12 is a schematic diagram showing the adoption of IGBT for the PWM three-phase inverter bridge circuit in each embodiment of the disclosure; as shown in Fig. 12, the circuit adopts six IGBTs, the six IGBTs are connected in serial two by two to form three bridge arms; then, the three bridge arms are connected in parallel; and the positive and negative ends at the DC side of the circuit are connected to a filter capacitor in parallel to control the current at the AC side by controlling the on/off of the six IGBTs.

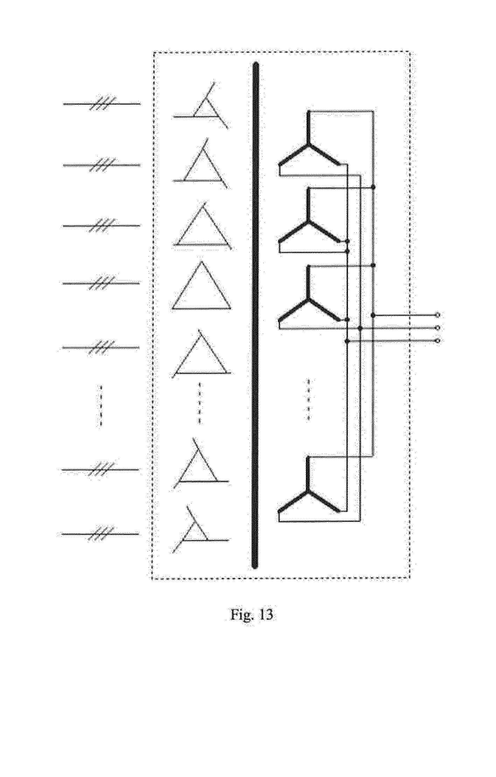

In each embodiment of the disclosure, the transformer for connecting the electric energy conversion device to the power grid may be a split transformer, the windings at the primary side of which are a plurality of three-phase windings connected in parallel, so that the windings at its secondary side are in short circuit impedance and symmetrical distribution; and the transformer can be further a phase-shifting transformer, the windings at the secondary side of which adopt a phase-shifting winding. As shown in Fig. 13, which is a schematic diagram showing a transformer adopting a split phase-shifting winding according to one embodiment of the disclosure, the transformer here contains a plurality of primary windings connected in parallel; a plurality of secondary windings may adopt an extended triangular winding or a zigzag phase-shifting winding; and different secondary windings can be arranged in different phase-shifting angles. A split phase-shifting transformer can be adopted to improve the waveform coefficient of the current fed back to the power grid and to reduce the harmonic wave.

It can be seen from what described above that, through the technical solutions of the embodiments of the disclosure, by processing the output of each phase of the three-phase or multi-phase AC generated by a power generation device, the waveform coefficient of the current of the power generation device is improved, the harmonic wave is reduced, and the power factor and the utilization rate of the device are improved; by taking a diode or a thyristor as a rectifier element, and a thyristor as the main switch element of a power conversion unit, the electric energy conversion device has a low cost and a high reliability; connected with thyristor three-phase fully-controlled bridge circuits of different grades in serial, the electric energy conversion device can be adapted to power generation devices of different grades, and the feedback power factor is improved; due to the a plurality of windings at the secondary side of the isolating transformer, the electric energy conversion device can be matched with power grids of different voltage grades, and the waveform coefficient and power factor of the current fed back to the power grid can be improved; and by transmitting reactive power to the power grid, the current at the output end of the power generation device and the current at the power grid have high sine wave, and the electric energy conversion device has the advantages of high conversion efficiency, reliable operation, long service life and easy popularization and maintenance.

The above are only preferred embodiments of the disclosure and not used for limiting the disclosure. For those skilled in the art, the disclosure may have various modifications and changes. Any modifications, equivalent replacements, improvements and the like within the spirit principle, of the disclosure, shall fall within the scope of protection of the disclosure.

## Claims

1. An electric energy conversion device, **characterized by** comprising:
a plurality of single-phase rectifier bridge circuits,
wherein a first input end of the plurality of single-phase rectifier bridge circuits are connected with an output end of each phase of an Alternating Current (AC) power supply one to one, and a second input end of the plurality of single-phase rectifier bridge circuits are connected together; and
a plurality of three-phase fully-controlled bridge circuits, wherein
two input ends of each of the plurality of three-phase fully-controlled bridge circuits are connected with two output ends of each of the plurality of single-phase rectifier bridge circuit respectively, or, two input ends of each of the plurality of three-phase fully-controlled bridge circuits are connected with two output ends of each of the plurality of single-phase rectifier bridge circuits through an inductor respectively.

2. The device according to claim 1, **characterized by** further comprising: a transformer provided with a plurality of three-phase windings at the secondary side, wherein the output ends of the three-phase fully-controlled bridge circuits are connected with the three-phase windings respectively.

3. The device according to claim 1 or 2, **characterized by** further comprising at least one Pulse Width Modulation (PWM) three-phase inverter bridge circuit, three output ends of which are connected with three output ends of the three-phase fully-controlled bridge circuit via inductors in serial or via inductors and capacitors in serial respectively, or directly connected with the plurality of three-phase windings.

4. An electric energy conversion device, **characterized by** comprising:
a plurality of rectifier circuitries, wherein
each of the plurality of rectifier circuitries comprises a plurality of rectifier bridge circuits, the plurality of rectifier bridge circuits are sequentially connected in serial through a first input end and a second input end; the first input end of the rectifier bridge circuit at one end serves as the first input end of the rectifier circuitries, while the second input end of the rectifier bridge circuit at the other end serves as the second input end of the rectifier circuitries; a plurality of first input ends of the plurality of rectifier circuitries are connected with an output end of each phase of an AC power supply one to one, and a plurality of second input ends are connected together; and
a plurality of three-phase fully-controlled bridge circuits, wherein
two input ends of each of the plurality of three-phase fully-controlled bridge circuits are connected with two output ends of each of the plurality of single-phase rectifier bridge circuit respectively, or, two input ends of each of the plurality of three-phase fully-controlled bridge circuit are connected with two output ends of each of the plurality of single-phase rectifier bridge circuit through an inductor respectively.

5. The device according to claim 4, **characterized by** further comprising a transformer provided with a plurality of three-phase windings at the secondary side, wherein the output ends of the three-phase fully-controlled bridge circuit are connected with the three-phase windings respectively.

6. The device according to claim 4 or 5, **characterized by** further comprising at least one PWM three-phase inverter bridge circuit, three output ends of which are connected with three output ends of the three-phase fully-controlled bridge circuit via inductors in serial or via inductors and capacitors in serial respectively, or directly connected with the plurality of three-phase windings.
